# EUROPÄISCHE PATENTANMELDUNG

(11) **EP 4 821 810 A2**
(43) Veröffentlichungstag der Anmeldung: **14.10.2026**
(21) Anmeldenummer: 26181908.0
(22) Anmeldetag: 13.12.2018
(51) Int. Cl.: B64C 29/00

(54) **FLUGMODUL**

(30) Priorität: 15.12.2017 DE 102017130251; 15.12.2017 DE 102017130252; 15.12.2017 DE 102017130253; 15.12.2017 DE 102017130255; 15.12.2017 DE 102017130254
(62) Dokumentnummer(n) der früheren Anmeldung(en) nach Art. 76 EPÜ: 18842509.4 / 3 724 072
(71) Anmelder: GermaniumTech GmbH, 01328 Dresden (DE)
(72) Erfinder: WERNER, Jens, 01723 Wilsdruff OT Kesselsdorf (DE); PEZUS, Phil, 01723 Wilsdruff OT Kesselsdorf (DE); BIELER, Matthias, 01723 Wilsdruff OT Kesselsdorf (DE); FRANKE, Florian, 01723 Wilsdruff OT Kesselsdorf (DE)
(74) Vertreter: Lippert Stachow Patentanwälte Rechtsanwälte Partnerschaft mbB

(57) **Zusammenfassung**

Es wird ein Flugmodul 1 für ein senkrecht startendes und landendes Fluggerät mit mehreren an einer Tragwerksstruktur 2 angeordneten Antriebseinheiten 3 angegeben, wobei die Tragwerksstruktur 2 an Knotenpunkten 4 miteinander verbundene Tragwerksbalken 5 aufweist und jede Antriebseinheit 3 einen Elektromotor 6 und einen mit dem Elektromotor 6 in einer Wirkverbindung stehenden Propeller 7 aufweist. Eine Anzahl der Antriebseinheiten 3 ist außerhalb der Knotenpunkte 4 angeordnet.

## Beschreibung

Die Erfindung betrifft ein Flugmodul für ein senkrecht startendes und landendes Fluggerät.

Fluggeräte zum Transport von Personen und/oder Lasten gewinnen zunehmend an Bedeutung, da sie eine schnelle Beförderung weitgehend unabhängig von Infrastruktureinrichtungen, wie z. B. Straßen, Schienen, Brücken, Tunnel usw., ermöglichen. Insbesondere trifft dies auf kleinere Fluggeräte zu, die senkrecht starten und landen können und daher keine Start- und Landebahn benötigen.

Aus der WO 2013/124300 ist beispielsweise ein Fluggerät bekannt, dass mehrere in einer Fläche angeordnete Propeller und diesen zugeordnete Elektromotoren aufweist. Die Rotorblätter des Propellers und ihre Blattwurzeln können aus einem Faserverbundwerkstoff, beispielsweise aus mit Kohlefaser verstärktem Kunststoff, bestehen. In einer näher beschriebenen Ausführungsform umfasst das Fluggerät eine Rahmenstruktur aus zug- und druckfesten Streben, die an Knotenpunkten unter Ausbildung einer hexagonalen Struktur mit dreieckförmigen Einheitszellen miteinander verbunden sind. Die Propeller sind jeweils an den Knotenpunkten angeordnet.

Auch die DE 10 2013 108 207 A1 offenbart ein Fluggerät, welches modular montiert und demontiert werden kann und zur Bergung von Personen oder Objekten geeignet ist. Das Fluggerät weist ein Zentralmodul auf, an welchem Auslegerarme mit Rotoreinheiten und eine Trageinheit oder Personenbeförderungseinheit anordbar sind. Darüber hinaus verfügt das Fluggerät über in einer Ebene angeordnete Rotoren, die jeweils über einen elektrischen Antrieb nebst elektrischer Energieversorgungseinheit und Regelungselektronik verfügen.

Der Erfindung liegt die Aufgabe zu Grunde, ein vielfältig einsetzbares Flugmodul für ein senkrecht startendes und landendes Fluggerät anzugeben, das eine verbesserte Stabilität und folglich eine verbesserte Betriebssicherheit aufweist.

Gelöst wird diese Aufgabe durch den Gegenstand des unabhängigen Anspruchs. Vorteilhafte Weiterbildungen der Erfindung sind in den Unteransprüchen angegeben.

Das erfindungsgemäße senkrecht startende und landende Fluggerät weist ein Flugmodul für den Antrieb des Fluggerätes auf, welches modular mit einem Transportmodul zur Beförderung von Personen und/oder Nutzlasten verbindbar ist.

Das Flugmodul weist mehrere an einer Tragwerksstruktur angeordnete Antriebseinheiten auf, wobei die Tragwerksstruktur an Knotenpunkten miteinander verbundene Tragwerksbalken aufweist und jede Antriebseinheit einen Elektromotor und wenigstens einen mit dem Elektromotor in einer Wirkverbindung stehenden Propeller aufweist.

Erfindungsgemäß ist vorgesehen, dass eine Anzahl der Antriebseinheiten, d. h. einige oder alle Antriebseinheiten, außerhalb der Knotenpunkte, beispielsweise mittig auf einem Tragwerksbalken der Tragwerksstruktur, angeordnet sind.

Die Anzahl der Antriebseinheiten, die außerhalb der Knotenpunkte angeordnet sind, ist durch einen Teil der Antriebseinheiten oder sämtliche Antriebseinheiten des Flugmoduls bestimmt.

Die Antriebseinheiten können optional in einer oder mehreren Ebenen angeordnet sein, wie zum Beispiel in einer Ebene der Tragwerkstruktur und / oder oberhalb und /oder unterhalb der Tragwerksstruktur

Zudem können mehrere Antriebseinheiten koaxial zur Rotorwelle der Elektromotoren übereinander angeordnet sein.

Das Flugmodul dient dem Antrieb eines sog. VTOL (engl. Vertical Take-Off and Landing) Fluggeräts, insbesondere eines Fluggeräts, welches zum Transport von Personen und/oder Lasten ausgebildet ist. Die Tragwerksstruktur kann radial, axial und tangential angeordnete, vorzugweise gerade oder gekrümmte Tragwerksbalken aufweisen, die beispielsweise mittels der Tragwerksstruktur zugeordneten Verbindungsstücken, z. B. T-Stücken, an Knotenpunkten miteinander und ggf. mit einer mittig in der Tragwerksstruktur angeordneten Zentraleinheit verbunden sein können.

Die miteinander verbundenen Tragwerksbalken bilden vorzugsweise eine in sich geschlossene Tragwerksstruktur, d. h. ohne frei endende Tragwerksbalken, die damit besonders steif ist.

Die Tragwerksbalken können beispielsweise so angeordnet sein, dass eine ebene, hexagonal verstrebte Tragwerksstruktur ausgebildet ist. Dazu können sechs radial gleichmäßig verteilt angeordnete Tragwerksbalken vorgesehen sein, so dass zwei benachbarte radial angeordnete Tragwerksbalken einen Winkel von ungefähr 60 ° einschließen.

Die Verbindungsstücke können bevorzugt so ausgebildet sein, dass ein flächig anliegender, bündiger Sitz der Tragwerksbalken im Verbindungsstück ermöglicht wird. Besonders bevorzugt kann ein Ausleger des Verbindungsstücks den Tragwerksbalken in der Art einer Steckverbindung vollständig umschließen. Ein derartiger Sitz ermöglicht eine gezielte Ausrichtung sowie eine flächige Verteilung der Lagerkräfte.

Zur Ausbildung einer ebenen, hexagonalen Form der Tragwerksstruktur können drei Ausleger des Verbindungsstücks in einer Ebene angeordnet sein, wobei der Winkel zwischen den Auslegern ca. 60 ° beträgt. Die Verbindungsstücke können aus einer Ober- und einer Unterschale gebildet sein, um die Montage und Wartung zu vereinfachen.

Zur Steigerung der Festigkeit der Verbindung können die Tragwerksbalken innerhalb der Verbindungsstücke untereinander formschlüssig verbunden sein. Die Enden der Tragwerksbalken können so ausgebildet sein, dass diese ineinander gesteckt werden können.

Die Propeller können zwei oder mehr Rotorblätter aufweisen, welche mit ihren Blattwurzeln an einer Nabe befestigt sind. Die Rotorblätter sind so geformt und ausgerichtet, dass sie bei einer Rotationsbewegung des Propellers von der Umgebungsluft asymmetrisch umströmt werden, so dass eine Auftriebswirkung des Flugmoduls erzeugt wird. Die Auftriebswirkung des Flugmoduls kann veränderbar ausgeführt sein, wobei die Propeller über eine feste oder richtungsverstellbare Welle zur Einstellung des Neigungswinkels der Propeller verfügen können und ebenso die Rotorblätter über eine feste oder verstellbare Achse zur Einstellung derer Anstellwinkel verfügen können.

Jedem Elektromotor kann ein oder können mehrere Propeller zugeordnet sein, wobei der Elektromotor mit dem / die Propeller in einer Wirkverbindung steht, d. h. den / die Propeller antreibt. Dazu können Propeller und zugehöriger Elektromotor miteinander verschraubt sein.

Einem Elektromotor können mehrere koaxial zur Rotorwelle angeordnete Propeller zugeordnet sein, welche oberhalb und /oder unterhalb des Elektromotors angeordnet sein können.

Die Elektromotoren können als bürstenlose Gleichstrommotoren ausgebildet sein. Derartige Motoren zeichnen sich durch einen geringen Wartungsaufwand aus. Zudem kann jede Antriebseinheit einen Motorcontroller aufweisen, so dass jede Antriebseinheit unabhängig von den anderen Antriebseinheiten gesteuert werden kann.

Zur Abdichtung, z. B. gegenüber Wasser oder Schmutz, und/oder zur Reduzierung des aerodynamischen Widerstands kann an jeder Antriebseinheit eine Abdeckung angëordnet sein, z. B. in Form eines sog. Spinners zur stromlinienförmigen Verkleidung der Nabe.

Beispielsweise kann das Flugmodul in der hexagonalen Ausführung der Tragwerksstruktur insgesamt 18 Antriebseinheiten aufweisen.

Das Flugmodul oder die einzelnen Propeller können ohne Ummantelung oder mit einer Ummantelung ausgeführt sein. Die Ummantelung kann beispielsweise als Schutzgitter ausgeführt sein. Eine Ummantelung erhöht die Sicherheit für Bodenpersonal und Passagiere, da ein unbeabsichtigter Kontakt mit den Rotorblättern vermieden wird. Die Ausführung ohne Ummantelung hat den Vorteil eines geringeren Gewichts des Flugmoduls und vereinfacht die Wartung der Propeller.

Die erfindungsgemäß vorgesehene Anordnung einer Anzahl der Antriebseinheiten außerhalb der Knotenpunkte bewirkt eine verbesserte Stabilität des Flugmoduls, da hierdurch die Antriebskräfte außerhalb der Knotenpunkte in die Tragstruktur eingeleitet werden. Auf diese Weise werden die Knotenpunkte, welche bereits hohe Belastungen aus den Tragwerksbalken erfahren, nicht zusätzlich durch die Antriebskräfte beansprucht.

Dadurch kann die Tragwerksstruktur mit weniger Material, d. h. leichter hinsichtlich der Masse und kostengünstiger hinsichtlich der Herstellung ausgeführt werden.

Die Anordnung der erforderlichen Antriebseinheiten außerhalb der Knotenpunkte führt außerdem zu einer Minimierung der notwendigen Tragwerksbalken und Knotenpunkte, was die Tragwerksstruktur vereinfacht und damit kostengünstiger macht.

Die minimierte Konstruktion der Tragwerksstruktur sorgt zudem einerseits für eine geringere Masse und erzeugt andererseits eine geringere Abdeckung der Abwindfläche der Propeller, was jeweils den Wirkungsgrad des Flugmoduls verbessert und damit den Kraftstoffverbrauch bei der Benutzung des Flugmoduls mindert.

Zudem führt die erfindungsgemäße Ausführung zu einer höheren Funktionssicherheit und damit zu einer verbesserten Betriebssicherheit des Flugmoduls.

Gemäß verschiedenen Ausführungsvarianten kann das Flugmodul eine Zentraleinheit aufweisen, die bevorzugt mittig zu einer Mittelachse (M) des Flugmoduls angeordnet sein kann. Die Mittelachse (M) kann beispielsweise eine Symmetrieachse des Flugmoduls sein und /oder senkrecht zu einer im Wesentlichen in einer Ebene angeordneten Tragwerksstruktur verlaufen.

Die Zentraleinheit kann, bezogen auf ihre äußere Form, als Halbkugel, Kugel, abgeflachte Kugel oder Ellipsoid ausgebildet sein und beispielsweise ein Gehäuse, z. B. in Form einer Halbkugel oder eines Ellipsoids, aufweisen. Beispielsweise kann die Zentraleinheit aus zwei miteinander verbundenen, z. B. verschraubten, Hälften ausgebildet sein. Zur Wartung und Durchführung kleinerer Reparaturen können Eingriffe vorgesehen sein. Die Zentraleinheit kann zudem zur Aufnahme von Tragwerksbalken der Tragwerksstruktur ausgebildet sein, z. B. indem Tragwerksbalken der Tragwerksstruktur mit einem Ende an der Zentraleinheit befestigt sind und von der Zentraleinheit radial nach außen verlaufen.

Die Zentraleinheit kann beispielsweise zur Aufbewahrung oder zur Anordnung von Gegenständen, wie z. B. Hilfsmitteln oder technische Funktionseinheiten, ausgebildet sein. Beispielsweise kann die Zentraleinheit ein Rettungssystem, z. B. einen Fallschirm zum Herausschießen, im obersten Teil der Zentraleinheit aufweisen.

Die Zentraleinheit kann technische Funktionseinheiten, wie z. B. Steuerungs-, Lagebestimmungs- und/oder Kommunikationstechnik und/oder ein Lademodul aufweisen.

Zur Aufbewahrung oder Anordnung der Hilfsmittel und/oder technischen Funktionseinheiten kann das Gehäuse der Zentraleinheit einen oder mehrere Hohlräume aufweisen. Die Hilfsmittel oder technischen Funktionseinheiten können in den Hohlräumen und/oder an dem Gehäuse, beispielsweise oberseitig oder seitlich im Freiraum zwischen den radialen Tragwerksbalken, angeordnet sein.

Ein integriertes Lademodul kannEnergiespeicher, z. B. in Form von wiederaufladbaren Akkumulatoren oder Superkondensatoren, eine Ladeeinrichtung und/oder Solarzellen aufweisen.

Die Ladeeinrichtung kann zur Übertragung von elektrischer Energie von einer externen Ladestation in den/die Energiespeicher ausgebildet sein.

Die Energiespeicher können zur Speicherung der übertragenen und/oder mittels der Solarzellen eigenerzeugten elektrischen Energie und zur Energieversorgung der Antriebseinheiten und/oder des an das Flugmodul ankoppelbaren Transportmoduls des Fluggeräts ausgebildet sein.

Mittels der integrierten Steuerungs-, Lagebestimmungs- und/oder Kommunikationstechnik kann je nach konkreter Ausführung das Flugmodul zur teilautonomen oder vollautonomen Arbeitsweise befähigt sein.

Die integrierte Lagebestimmungstechnik kann beispielsweise mittels Ortungssignalen, z. B. eines globalen Navigationssatellitensystems wie GPS, Galileo, GLONASS, Beidou etc., zur Positionsbestimmung des Flugmoduls oder Fluggeräts ausgebildet sein und der Ermittlung und Kontrolle der Flugroute und des Flugziels des Flugmoduls oder Fluggerätes dienen.

Die integrierte Kommunikationstechnik kann zur internen und/oder externen Kommunikation ausgebildet sein, wobei unter interner Kommunikation die Kommunikation mit Modulen, die direkt zur Verwendung mit dem Flugmodul vorgesehen sind, zu verstehen ist, also beispielsweise die Kommunikation zur Verständigung zwischen Flug- und Transportmodul oder Flugmodul und Bodenkontrollstation.

Unter externer Kommunikation ist beispielsweise die Kommunikation bezüglich Flugerlaubnis, Flugroute, Standort etc. bei der Flugsicherung oder der Informationsaustausch mit Wetterdiensten zu verstehen.

Darüber hinaus kann die Zentraleinheit auch Soft- und/oder Hardware für die Durchführung eines Landeanflugs auf eine Start- und Landestation aufweisen.

Durch die Positionierung von Hilfsmitteln und technischen Funktionselementen in oder an der mittig angeordneten Zentraleinheit kann eine Schwerpunktlage konzentriert im Zentrum des Flugmoduls ermöglicht werden, wodurch die Steuer- und Regelfähigkeit des Flugmoduls verbessert ist.

Gemäß verschiedenen Ausführungsvarianten kann das Flugmodul, bevorzugt dessen Zentraleinheit, eine Kupplungseinrichtung zur Verbindung des Flugmoduls mit einem Transportmodul aufweisen. Mit anderen Worten ist die Kupplungseinrichtung zum An- und Abkuppeln eines Transportmoduls ausgebildet. Bevorzugt kann die Kupplungseinrichtung mittig an der Zentraleinheit angeordnet sein. Die miteinander gekoppelten Module (Transportmodul und Flugmodul) bilden zusammen das Fluggerät.

In einer Ausgestaltungsvariante kann die Kupplungseinrichtung als Kupplungsgegenstück einer Gelenkkupplung zwischen einem kuppelbaren Transportmodul und dem Flugmodul ausgebildet sein.

Das zum Kupplungsgegenstück korrespondierende Kupplungsstück der Gelenkkupplung ist dabei an einem Transportmodul angeordnet, so dass das Transportmodul richtungsflexibel mit dem Flugmodul gekuppelt werden kann.

Somit kann die Neigung des Flugmoduls, also der Neigungswinkel α, der von einer Schwerkraftlinie, die senkrecht zur Erdoberfläche verläuft, und der Ebene E der Tragwerksstruktur eingeschlossen wird, variiert werden. Bei angekuppeltem Transportmodul kann folglich die Neigung zwischen Flugmodul und Transportmodul variiert werden, wodurch z. B. eine komfortable, im Wesentlichen stets vertikale Ausrichtung des Transportmoduls auch bei einer abweichenden Steuereingabe für die Neigung des Flugmoduls gewährleistet werden kann. Ist das Transportmodul in vertikaler Ausrichtung an dem Flugmodul angeordnet, entspricht die Schwerkraftlinie einer Längsachse des Schafts des Transportmoduls.

Zudem kann in dieser Anordnung der Schwerpunkt des Fluggeräts in einem zentralen Bereich des Flugmoduls zentriert werden, so dass die Steuer- und Regelfähigkeit des Fluggeräts verbessert sein kann.

Der Neigungswinkel α kann beispielsweise zwischen 30° und 150° variierbar sein. Bei einem Neigungswinkel α von 90° ist die Ebene der Tragwerksstruktur des Flugmoduls senkrecht zur Schwerkraftlinie und folglich parallel zur Erdoberfläche angeordnet. In diesem Zustand kann die Schwerkraftlinie der Mittelachse des Flugmoduls entsprechen. Bei Beschleunigung des Flugmoduls kann die Ebene E der Tragwerksstruktur in Flugrichtung nach unten geneigt werden, d. h. es wird ein Neigungswinkel α < 90° eingestellt. Beim Abbremsen des Flugmoduls kann die Ebene E der Tragwerksstruktur in Flugrichtung nach oben geneigt werden, d. h. es wird ein Neigungswinkel α > 90° eingestellt.

Die Kupplungseinrichtung kann bevorzugt so ausgebildet sein, dass unter jeglicher Nutzungsbelastung die korrekte Ankupplung des Transportmoduls stets gewährleistet ist. Des Weiteren kann sie über einen Kontrollmechanismus zum Bestätigen einer ordnungsgemäßen Verbindung sowie über einen Sicherheitsmechanismus zum manuellen Lösen der Verbindung im unbelasteten Zustand verfügen. Die Kupplungseinrichtung kann über eine Dämpfungseinrichtung verfügen, die beispielsweise zum Abfedern harter Landestöße ausgebildet sein kann.

Gemäß verschiedenen Ausführungsvarianten kann das Flugmodul eine oder mehrere Luftleiteinrichtungen aufweisen, vorzugsweise können die Luftleiteinrichtungen an den Tragwerksbalken der Tragwerksstruktur des Flugmoduls oder an den Verbindungsstücken zur Verbindung der Tragwerksbalken der Tragwerksstruktur befestigt sein.

Die Luftleiteinrichtungen können als Auftriebs- und Lenk- und Flughilfsmittel der Steigerung der Effizienz des Flugmoduls sowie zur Stabilisierung und/oder Verbesserung der Strömungseigenschaften und damit der Steuerbarkeit des Flugmoduls dienen.

Die Luftleiteinrichtungen können flügelartig, beispielsweise plattenförmig oder leicht gewölbt, ausgebildet sein. Optional kann die Position der Luftleiteinrichtungen gegenüber dem übrigen Flugmodul drehbeweglich oder linear verfahrbar ausgebildet sein.

Beispielsweise können die flügelartigen Luftleiteinrichtungen an die Tragwerksstruktur angeklappt und von dieser abgeklappt werden und/oder um ihre Längsachse drehbar gelagert sein.

Die Lufteinrichtungen können zumindest teilweise in ihrer Ausrichtung zu einem mit dem Flugmodul gekoppelten Transportmodul und/oder zur Tragwerkstruktur des Flugmoduls steuerbar einstellbar ausgebildet sein, insbesondere mit einem Anstellwinkel β gegenüber dem Transportmodul und / oder gegenüber der Tragwerkstruktur des Flugmoduls variabel ausrichtbar sein, so dass ihre Auftriebs- bzw. Lenkfunktion während des Flugbetriebes optimal an die Strömungsverhältnisse etc. angepasst werden kann.

Insbesondere können die an der Tragwerksstruktur befestigten, um ihre Längsachse drehbar gelagerten Luftleiteinrichtungen jeweils in einem Anstellwinkel β, der zwischen der Ebene E der Tragwerksstruktur und einer mittleren Querschnittsebene der Luftleiteinrichtung eingeschlossene ist, variierbar sein. Bevorzugt kann der Anstellwinkel β in einem Bereich zwischen 110° (in Flugrichtung weisender Flügelabschnitt der Luftleiteinrichtung steil nach oben in Flugrichtung weisend angestellt) und 260 ° (entgegen der Flugrichtung weisender Flügelabschnitt der Luftleiteinrichtung steil nach oben angestellt) variierbar sein. Bei einem Anstellwinkel β von 180° liegen die Luftleiteinrichtungen und die Tragwerksstruktur in einer Ebene. Bei mehreren Luftleiteinrichtungen können die jeweiligen Anstellwinkel β unabhängig voneinander variierbar sein.

Durch die Variation des Anstellwinkels β kann beispielsweise die Auftriebsfunktion des Flugmoduls entsprechend der Strömungsverhältnisse beeinflusst werden. Werden die Luftleiteinrichtungen mit jeweils verschieden großen Anstellwinkeln ß ausgerichtet, kann beispielsweise die Lenkfunktion des Flugmoduls beeinflusst werden.

In einer Ausführungsvariante kann der Anstellwinkel β in Abhängigkeit des Neigungswinkels α variierbar sein. Bei Neigung des Flugmoduls gegenüber der Schwerkraftlinie S kann durch geeignete Variation des Anstellwinkels β ein durch die Neigung des Flugmoduls verringerter Auftrieb wieder erhöht werden. Bei Beschleunigung des Flugmoduls mit in Flugrichtung nach unten geneigter Ebene E der Tragwerksstruktur (α < 90°) können hierzu die Luftleiteinrichtungen gegenläufig, d. h. mit einem Anstellwinkel β größer 90 ° und kleiner 180 °, angestellt werden. Beim Abbremsen des Flugmoduls mit in Flugrichtung nach oben geneigter Ebene E der Tragwerksstruktur (α > 90°) können die Luftleiteinrichtungen hierzu gegenläufig, d. h. mit einem Anstellwinkel β größer 180 ° und kleiner 270 °, angestellt werden.

Mit derartigen Auftriebshilfen kann nicht nur der Auftrieb des Flugmoduls verbessert und damit die Propellerleistung reduziert und Energie eingespart werden werden, sondern u. a. auch die Flugstabilität des Fluggerätes verbessert werden.

Zur Ausführung der vorstehend beschriebenen Betriebsweisen des Flugmoduls und der Luftleiteinrichtungen kann die Steuerungstechnik des Flugmoduls beispielsweise zum Ausgeben eines Steuersignals zum Einschalten oder Ausschalten der Antriebseinheiten eingerichtet und ausgebildet sein. Alternativ oder zusätzlich kann die Steuerungstechnik zum Ausgeben eines Steuersignals zum Öffnen oder Schließen der Kupplungseinrichtung und/oder zum Einstellen des Neigungswinkels α, d. h. der Neigung eines angekoppelten Transportmoduls bezüglich des Flugmoduls eingerichtet und ausgebildet sein. Die Kupplungseinrichtung kann entsprechend als steuerbare Kupplungseinrichtung ausgebildet ist. Alternativ oder zusätzlich kann die Steuereinheit zum Ausgeben eines Steuersignals zum Einstellen des Anstellwinkels β ausgebildet sein.

Gemäß verschiedenen Ausführungsvarianten kann vorgesehen sein, dass eine Anzahl der Antriebseinheiten, d. h. einige oder alle Antriebseinheiten, konzentrisch um eine Mittelachse (M) des Flugmoduls angeordnet sind. Mit anderen Worten können die Antriebseinheiten symmetrisch um eine gemeinsame Mitte mit der Mittelachse (M) des Flugmoduls und in einer oder in mehreren Ebenen verteilt angeordnet sein. Hierdurch und im Weiteren auch durch die im Flugmodul mittig angeordnete Zentraleinheit kann eine stabile Flugeigenschaft des Flugmoduls erreicht werden.

Beispielsweise kann eine Anzahl der Antriebseinheiten in einem identischen radialen Abstand (Radius) von der Mittelachse (M) des Flugmoduls und damit ringförmig (in einem Ring) um die Mittelachse (M) des Flugmoduls angeordnet sein.

Vorzugsweise ist unter dem radialen Abstand die Entfernung zwischen der Mittelachse (M) des Flugmoduls und der Nabenachse des jeweiligen Propellers der Antriebseinheit zu verstehen.

Die Anzahl der Antriebseinheiten mit identischem radialem Abstand von der Mittelachse (M) des Flugmoduls bilden in einer gedachten kreisbogenförmigen Verbindungslinie mit gleichbleibendem Radius einen Ring.

Die Antriebseinheiten können auch in mehreren Ringen mit identischem Radius bzw. Ringdurchmesser auf mehreren Ebenen um die Mittelachse (M) angeordnet sein.

Die Antriebseinheiten können in mehreren Ringen (R1, R2, R3) mit unterschiedlichem Radius bzw. Ringdurchmesser (DR1, DR2, DR3) in einer Ebene um die Mittelachse (M) des Flugmoduls angeordnet sein.

Durch die Anordnung einer Anzahl der Antriebseinheiten insbesondere in einem oder mehreren Ringen kann beispielsweise eine erste Gruppe von Antriebseinheiten einen ersten, identischen radialen Abstand von der Mittelachse (M) des Flugmoduls aufweisen und einen ersten Ring (R1) bilden. Eine zweite Gruppe von Antriebseinheiten kann einen zweiten, identischen radialen Abstand von der Mittelachse (M) aufweisen und einen zweiten Ring (R2) bilden und so weiter.

Ein dritter Ring (R3) mit dem größten Abstand der Antriebseinheiten von der Mittelachse des Flugmoduls kann den äußeren Ring bilden, während der erste Ring (R1) einen inneren Ring mit dem geringsten Abstand zur Mittelachse (M) des Flugmoduls bildet.

Die Ringdurchmesser der Ringe und der Durchmesser der Rotoren der Propeller kann in Abhängigkeit der Abmessungen der Beförderungskapsel gewählt sein, um den erzeugten Abwind der Propeller der Antriebseinheiten in Hinblick auf die Position und Größe der Beförderungskapsel abzustimmen.

Unter dem Durchmesser eines Rotors des Propellers ist der Durchmesser der Kreislinie zu verstehen, die während der Rotationsbewegung der Rotorblätter des Propellers durch die äußeren Enden der Rotorblätter erzeugt wird.

So kann vorzugsweise der Ringdurchmesser des ersten, inneren Ringes (R1) so angeordnet sein, dass die vertikal projizierten Kreislinien der Rotoren der Antriebseinheiten des ersten, inneren Ringes nicht die vertikal projizierte Fläche der Beförderungskapsel überschneiden.

Hierdurch kann die Aerodynamik des Fluggeräts nachhaltig verbessert werden.

Selbstverständlich bedingt darüber hinaus die Gestaltung der Tragwerksstruktur, insbesondere die Anordnung derer Tragwerksbalken, die konkrete Platzierung der Antriebseinheiten an der Tragwerksstruktur..

Ist beispielsweise die Tragwerksbalkenanordnung der Tragwerksstruktur hexagonal ausgebildet, kann beispielsweise ein erster innerer Ring sechs Antriebseinheiten jeweils mittig auf einem der sechs radial nach außen weisenden Tragwerksbalken aufweisen, während ein zweiter Ring weitere sechs Antriebseinheiten jeweils am äußeren Ende der radial nach außen weisenden Tragwerksbalken aufweisen kann.

Weitere sechs Antriebseinheiten können jeweils mittig auf einem, die radial nach außen weisenden Tragwerksbalken verbindenden und die Tragwerksstruktur radial abschließenden Tragwerksbalken angeordnet sein und einen dritten Ring bilden.

Die direkten, geraden Verbindungslinien der Nabenachsen der Propeller eines Ringes können damit im Wesentlichen ein Sechseck bilden.

Gemäß verschiedenen Ausführungsvarianten können die Rotoren der Propeller einer Anzahl der Antriebseinheiten unterschiedliche Durchmesser aufweisen.

Unter dem Durchmesser eines Rotors des Propellers ist der Durchmesser der Kreislinie zu verstehen, die während der Rotationsbewegung der Rotorblätter des Propellers durch die äußeren Enden der Rotorblätter erzeugt wird.

Es besteht die Möglichkeit, dass alle Rotoren einen unterschiedlichen Durchmesser aufweisen oder dass eine erste Gruppe von Rotoren einen jeweils einheitlichen, aber eine zweite Gruppe von Rotoren einen zur ersten Gruppe der Rotoren verschiedenen Durchmesser aufweist.

Beispielsweise können Rotoren der Propeller der Antriebseinheiten eines Rings einen einheitlichen Durchmesser aufweisen. Alternativ können die Rotoren der Propeller der Antriebseinheiten eines Rings unterschiedliche Durchmesser aufweisen.

So können beispielsweise die Rotoren der Propeller der Antriebseinheiten eines Rings einen sich abwechselnden unterschiedlichen Durchmesser aufweisen.

Mit der Anordnung von Antriebseinheiten mit unterschiedlichem Rotordurchmesser kann die flächenmäßige Ausnutzung des Luftraumes oberhalb der Tragwerksstruktur optimiert werden und damit die Auftriebswirkung des Flugmoduls verbessert werden.

Sind beispielsweise drei Ringe der Antriebseinheiten vorgesehen, können beispielsweise die Rotoren der Propeller der Antriebseinheiten des ersten Rings R1 einen ersten einheitlichen Durchmesser d1 aufweisen, während die Rotoren der Propeller der Antriebseinheiten des zweiten Rings R2 einen zweiten einheitlichen Durchmesser d2 und die Rotoren der Propeller der Antriebseinheiten des dritten Rings R3 einen dritten einheitlichen Durchmesser d3 aufweisen.

Es besteht im Weiteren auch die Möglichkeit, dass die Rotoren der Propeller der Antriebseinheiten eines ersten und eines zweiten Rings R1, R2 einen einheitlichen Durchmesser und die Rotoren der Propeller der Antriebseinheiten des dritten Rings R3 einen unterschiedlichen Durchmesser aufweisen, so dass insgesamt nur zwei Propellergruppen unterschiedlichen Durchmessers vorhanden sind.

Damit verringert sich der Fertigungsaufwand, da lediglich zwei Propellergruppen mit zwei verschiedenen Rotordurchmessern hergestellt werden müssen.

Gemäß weiteren Ausführungsvarianten können die Durchmesser der Rotoren so gewählt sein, dass sich die von den Rotoren genutzten Lufträume, in einer Draufsicht senkrecht auf das Flugmodul, zumindest teilweise überlappen. In einer solchen Ausführungsvariante sind die Antriebseinheiten bevorzugt in mehreren Ebenen angeordnet, so dass auch hierdurch eine Kollision der Rotoren vermieden werden kann.

Alle Varianten ermöglichen auf ihre Weise zum einen eine verbesserte Luftraumausnutzung, da weniger Lücken im Luftraum über der Tragwerksstruktur vorhanden sind, die nicht durch einen Rotorkreis der Propeller ausgefüllt werden können, sowie zum anderen eine günstigere Lastverteilung innerhalb des Flugmoduls.

Zur Vereinfachung der Fertigung, Montage und Wartung können jedoch auch alle Rotoren der Propeller einen einheitlichen Durchmesser aufweisen.

Gemäß weiteren Ausführungsvarianten können eine Anzahl von Tragwerksbalken, d.h. einige oder alle, ein Hohlprofil aufweisen.

Tragwerksbalken mit Hohlprofil bewirken eine günstige Massenreduzierung, zum Vorteil eines verbesserten Wirkungsgrades des Flugmoduls.

Weist das Hohlprofil zumindest teilweise gekrümmte Wandflächen auf, wirkt sich dies günstig auf die Aerodynamik des Flugmoduls aus, was zu einer Reduzierung des Luftwiderstands und zur weiteren Verbesserung des Wirkungsgrades des Flugmoduls beiträgt. Zudem wirken sich die gekrümmten Wandflächen günstig auf die Beul-Eigenschaften des Tragwerkbalkens aus.

Durch die Ausbildung der Tragwerksbalken als Hohlprofil kann eine signaltechnische Verbindung zu den Antriebseinheiten und/oder eine Energieversorgungleitung für die Antriebseinheiten innerhalb der Tragwerksbalken angeordnet werden, so dass diese weitgehend geschützt vor Umwelteinflüssen sind.

Das Hohlprofil des Tragwerksbalkens kann gemäß weiteren Ausführungsvarianten einen in Wirkrichtung der Antriebseinheiten längserstreckten Profilquerschnitt, vorzugsweise einen ovalen Profilquerschnitt, aufweisen.

Durch die einheitliche Wirkrichtung der Antriebseinheiten gibt es eine Hauptrichtung der Biegebelastung der Tragwerksbalken, die durch den längserstreckt ausgebildeten, mit seinen Längsseiten vertikal orientierten Profilquerschnitt vorteilhaft kompensiert werden kann.

Der längserstreckte Profilquerschnitt kann beispielsweise durch ein langlochförmigen, elliptischen, ovalen, oder kombiniert ovalen Profilquerschnitt gebildet sein, wobei die Längsseiten jedes der längserstreckten Profilquerschnitte stets vertikal in Richtung der Wirkrichtung der Antriebseinheiten erstreckt sind.

Der mit den Langseiten vertikal in Richtung der Wirkrichtung der Antriebseinheiten orientierte Profilquerschnitt des Hohlprofils kann gegenüber beispielsweise einem Kreisquerschnitt des Hohlprofils eine höhere Biegebelastung infolge der Wirkrichtung der Antriebseinheiten aufnehmen.

Unter dem langlochförmigen Profilquerschnitt wird ein Querschnitt verstanden, dessen Begrenzungslinie durch zwei Kreisbögen gleichen oder verschiedenen Radiuses und zwei geraden Abschnitten gebildet wird.

Die Begrenzungslinie eines elliptischen Querschnitts ist aus unendlich viele unterschiedlichen Radien zusammengesetzt.

Vorzugsweise weist das Hohlprofil einen ovalen Profilquerschnitt auf. Unter einem ovalen Querschnitt wird ein Querschnitt verstanden, dessen Begrenzungslinie durch zwei verschiedene Radien gebildet wird.

Ein kombiniert ovaler Profilquerschnitt kann mehr als zwei Radien, z. B. drei oder vier Radien, aufweisen.

Ein Hohlprofil mit elliptischem, ovalem oder kombiniert ovalem Querschnittsprofil, das ausschließlich gekrümmte Flächen aufweist, ist zudem noch weniger beulanfällig gegenüber einem langlochförmigen Profilquerschnitt mit ebenen Flächen.

Zusätzlich kann der ovale oder kombiniert ovale Querschnitt des Hohlprofils wegen des größeren Radiuses an dessen Schmalseiten gegenüber.dem spitz zulaufenden elliptischen Querschnitt ein noch günstigeres Verhältnis von Querschnittsfläche zum Flächenträgheitsmoment bieten.

Der Querschnitt des Hohlprofils kann bevorzugt in Stärke und Form an den Kraftverlauf und die zu erwartenden mechanischen Belastungen angepasst sein. Beispielsweise kann das Hohlprofil der Tragwerksbalken eine variable, d. h. sich verändernde Wandstärke entlang der Längserstreckung des Tragwerkbalkens und/oder in Umfangsrichtung des Tragwerksbalkens aufweisen.

Gemäß weiteren Ausführungsvarianten können die Tragwerksstruktur und/oder die Zentraleinheit und/oder eine Anzahl der Antriebseinheiten Bauelemente aus Faserverbundwerkstoff aufweisen oder aus Faserverbundwerkstoff bestehen.

So kann z. B. eine Anzahl der Tragwerksbalken und/oder der Verbindungsstücke und/oder Befestigungsmittel der Tragwerksstruktur zur Befestigung der Antriebseinheiten und/oder Naben der Propeller und/oder das Gehäuse der Zentraleinheit einen Faserverbundwerkstoff aufweisen oder aus einem Faserverbundwerkstoff bestehen.

Bei dem Faserverbundwerkstoff kann es sich beispielsweise um einen faserverstärkten Kunststoff handeln, wie z. B. kohlefaser-, glasfaser- oder basaltfaserverstärkten Kunststoff.

Der Faserverbundwerkstoff kann spezielle textile Faserverstärkungselemente aufweisen. Die textile Faserverstärkung kann in Form von flächigen oder bandförmigen Geweben, Gestricken, Gewirken oder Geflechten in eine Kunststoffmatrix eingebracht sein.

Beispielsweise kann das Gehäuse der Zentraleinheit aus einem faserverstärkten Kunststoff gebildet sein. Verfügt die Zentraleinheit über Kommunikationshardware, kann bevorzugt glasfaserverstärkter Kunststoff verwendet werden, um eine Beeinträchtigung der Funktionalität der Kommunikationshardware zu vermeiden.

Die Verwendung von Faserverbundwerkstoffen verwirklicht eine Verbesserung des Verhältnisses von Stabilität und Masse des Flugmoduls, da die aus Faserverbundwerkstoffen hergestellten Bauelemente eine niedrige Masse bei gleichzeitig guten bis sehr guten mechanischen Eigenschaften, wie z. B. Festigkeit, E-Modul, Schlagzähigkeit, aufweisen.

In einer Ausgestaltungsvariante können die Tragwerksbalken aus einem pultrudierten Hohlprofil aus faserverstärktem Kunststoff, z. B. kohlefaserverstärktem Kunststoff, gebildet sein.

Vorzugsweise kann der Faserverbundwerkstoff unidirektional angeordnete Verstärkungsfasern aufweisen.

Diese Verstärkungsfasern können konzentriert und im Wesentlichen einheitlich ausgerichtet als sogenannte UD-Fasergurte ausgebildet sein, die in differenziert angeordneten Lagen innerhalb des Faserverbundmaterials zur Kompensation bestimmter, am Tragwerksbalken auftretenden hohen mechanischen Belastungen eingesetzt werden.

Beispielsweise können Zug-, Druck- und/oder Biegebelastungen innerhalb der Tragwerksbalken von UD-Fasergurten aus unidirektionalen, axial verlaufenden Verstärkungsfasern aufgenommen werden, während Torsions- und/oder Schubbeanspruchungen durch in einem Winkel von +/- 45° ausgerichtete Fasern, z. B. in einem Gewebe oder Gelege, kompensiert werden.

Vorteilhafter Weise ist zur Kompensation der auftretenden Beanspruchung eine textile Faserverstärkung in der Preform der Tragwerksbalken wie beispielsweise folgender Maßen vorgesehen:
- abwechselnde Anordnung von einzelnen Faserlagen mit in einem Winkel von +/- 45° ausgerichtete Fasern durch Wickeln,
- unidirektionale, axial verlaufende Fäden als Gurte an der Ober- und Unterseite der Tragwerksbalken,
- abschließend äußere Faserlage mit in einem Winkel von +/- 45° ausgerichtete Fasern durch Flechten.

Das beim Flechten entstehende Fasergebilde mit gekreuzten und ondulierten Fasern steigert die Robustheit des Tragwerksbalkens.

Zudem kompensiert die äußere Lage mit einem Fasergebilde aus in einem Winkel von +/- 45° ausgerichtete Fasern besonders die auftretende Torsionsbeanspruchung des Tragwerkbalkens.

Gemäß verschiedenen Ausführungsvarianten kann eine Anzahl der Antriebseinheiten, beispielsweise einige oder alle Antriebseinheiten, mittels kraft- und/oder formschlüssiger Befestigungsmittel mit der Tragwerksstruktur, vorzugsweise mit den Tragwerksbalken verbunden sein.

Bevorzugt ist das Befestigungsmittel als eine Schelle ausgebildet, die einen Tragwerksbalken zumindest teilweise umschließt.

Beispielsweise kann die Schelle derart ausgebildet sein, dass sie das Hohlprofil des Tragwerkbalkens bündig umfasst, d. h. die Form der Schelle der Außenkontur des Balkens folgt.

Zur Steigerung der Stabilität und Steifigkeit kann die Schelle einen Omega-förmigen Querschnitt aufweisen, so dass das Drehmoment der Antriebseinheiten sowie Biege- und Schwingbelastungen ausgeglichen werden können.

Die Schelle kann mit dem Tragwerksbalken verschraubt, verklebt, vernietet sein oder mittels Klemmverbindung durch Verspannen mit dem Tragwerksbalken verbunden sein.

Die Schellen können über einen einseitig abgewinkelten Bereich zur Aufnahme der Antriebseinheiten verfügen. In diesem Bereich kann die Schelle mittels einer Schraub- oder Nietverbindung mit der Antriebseinheit verbunden werden.

Durch den Kraft- und/oder Formschluss kann eine verbesserte Positionierung der Antriebseinheiten an der Tragwerksstruktur sowie eine verbesserte Kraftübertragung von den Antriebseinheiten auf die Tragwerksstruktur ermöglicht werden.

Das Befestigungsmittel, z. B. die Schelle, kann zur Vereinfachung der Montage und Demontage mehrteilig, vorzugsweise zweiteilig, ausgebildet sein.

Weitere Vorteile der vorliegenden Erfindung sind aus den Abbildungen sowie der zugehörigen Beschreibung ersichtlich. Es zeigen:
- Figur 1: beispielhafte Darstellung eines Flugmoduls mit Zentraleinheit;
- Figur 2: beispielhafte Darstellung eines Flugmoduls mit Zentraleinheit und angekuppeltem Transportmodul;
- Fig. 3a,3b: Detaildarstellungen eines Verbindungsstückes;
- Fig. 3c,3d: Detaildarstellungen der Enden von zusammensteckba ren Tragwerksbalken;
- Figur 4: schematische Darstellung der Draufsicht auf die Tragwerksstruktur eines Flugmoduls;
- Figur 5: schematische Darstellung der Draufsicht eines Flugmoduls mit Tragwerksstruktur, daran angeordneten Antriebseinheiten und Zentraleinheit;
- Figur 6: schematische Darstellung der Seitenansicht auf die Tragwerksstruktur eines Flugmoduls mit Zentralein heit;
- Figur 7: schematische Darstellung der Luftraumabdeckung durch die Propeller der Antriebseinheiten eines Flugmoduls in einer ersten Variante;
- Figur 8: schematische Darstellung der Luftraumabdeckung durch die Propeller der Antriebseinheiten eines Flugmoduls in einer weiteren Variante;
- Figur 9a-c: schematische Darstellung verschiedener Querschnitte der Tragwerksbalken;
- Figur 10a-c: schematische Darstellung verschiedener Schellen zur Befestigung der Antriebseinheiten an der Tragwerksstruktur;
- Figur 11: schematische Darstellung der Draufsicht auf eine Tragwerksstruktur eines Flugmoduls mit Luftleiteinrichtungen; und
- Figur 12: schematische Darstellung eines geneigten Flugmoduls mit angestellten Luftleiteinrichtungen.

In den im Folgenden erläuterten Beispielen wird auf die beigefügten Zeichnungen Bezug genommen, die einen Teil der Beispiele bilden und in denen zur Veranschaulichung spezifische Ausführungsformen gezeigt sind, in denen die Erfindung ausgeübt werden kann. In dieser Hinsicht wird Richtungsterminologie wie etwa "oben", "unten", "vorne", "hinten", "vorderes", "hinteres" usw. mit Bezug auf die Orientierung der beschriebenen Figuren verwendet. Da Komponenten von Ausführungsformen in einer Anzahl verschiedener Orientierungen positioniert werden können, dient die Richtungsterminologie zur Veranschaulichung und ist auf keinerlei Weise einschränkend.

Es versteht sich, dass andere Ausführungsformen benutzt und strukturelle oder logische Änderungen vorgenommen werden können, ohne von dem Schutzumfang der vorliegenden Erfindung abzuweichen. Es versteht sich, dass die Merkmale der hierin beschriebenen verschiedenen beispielhaften Ausführungsformen miteinander kombiniert werden können, sofern nicht spezifisch anders angegeben. Die folgende ausführliche Beschreibung ist deshalb nicht in einschränkendem Sinne aufzufassen, und der Schutzumfang der vorliegenden Erfindung wird durch die angefügten Ansprüche definiert.

Im Rahmen dieser Beschreibung werden die Begriffe "verbunden", "angeschlossen" sowie "gekuppelt" verwendet zum Beschreiben sowohl einer direkten als auch einer indirekten Verbindung, eines direkten oder indirekten Anschlusses sowie einer direkten oder indirekten Kopplung. In den Figuren werden identische oder ähnliche Elemente mit identischen Bezugszeichen versehen, soweit dies zweckmäßig ist.

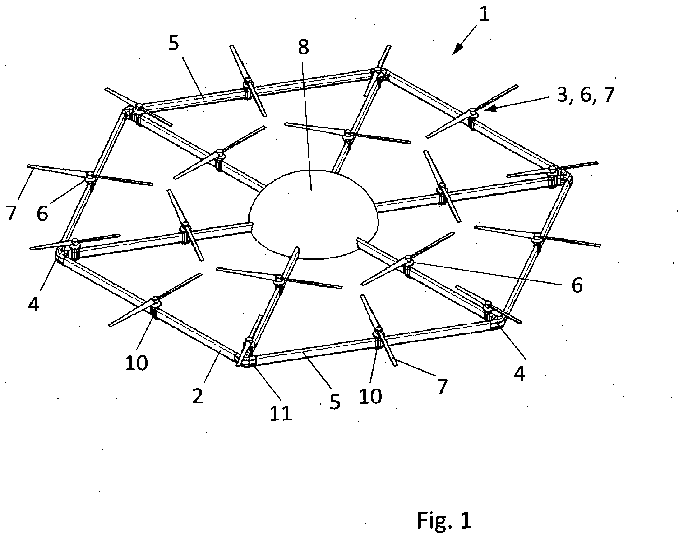

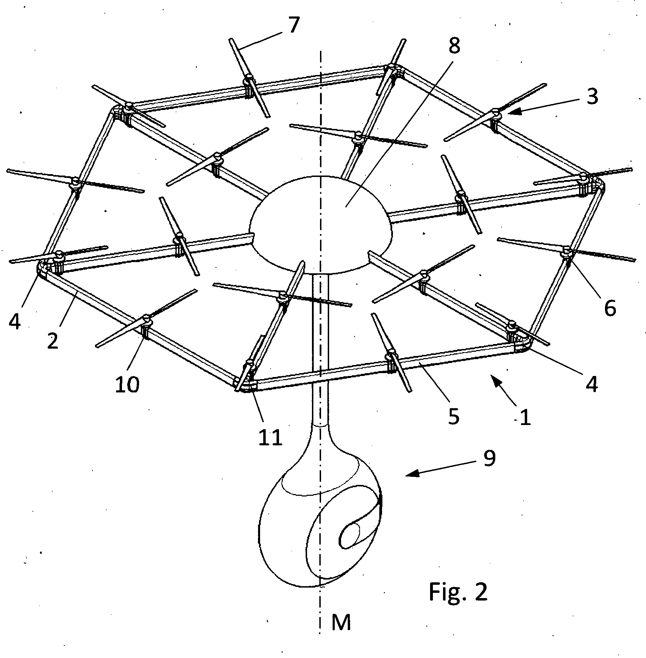

Figur 1 zeigt eine beispielhafte Darstellung eines Flugmoduls 1 für ein senkrecht startendes und landendes Fluggerät gemäß Fig. 2. Das Flugmodul 1 weist neben einer mittig zur vertikalen Mittelachse des Flugmoduls 1 angeordneten Zentraleinheit 8 eine Tragwerksstruktur 2 mit mehreren Tragwerksbalken 5 auf, die an Knotenpunkten 4 untereinander mittels als T-Stücke ausgebildeten Verbindungsstücken 11 sowie mit der Zentraleinheit 8 verbunden sind.

Das Fluggerät weist gemäß Figur 2 das Flugmodul 1 und ein mit dem Flugmodul 1 verbundenes Transportmodul 9 zum Transport von Personen und/oder Nutzlasten auf.

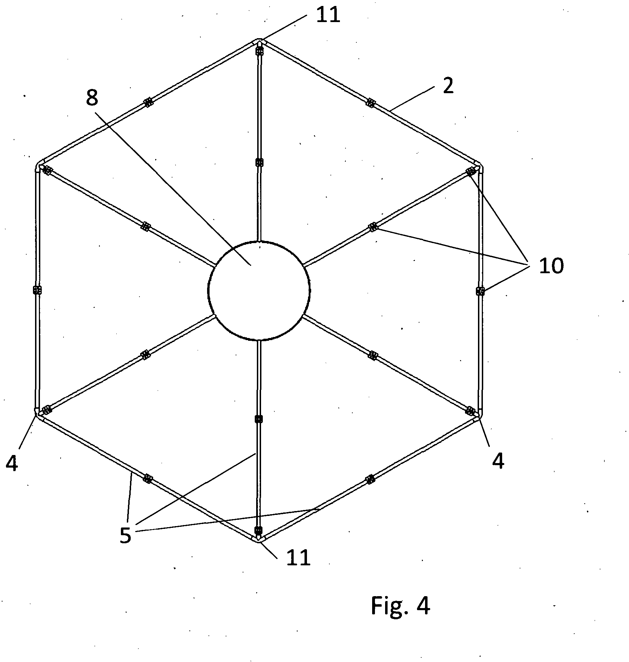

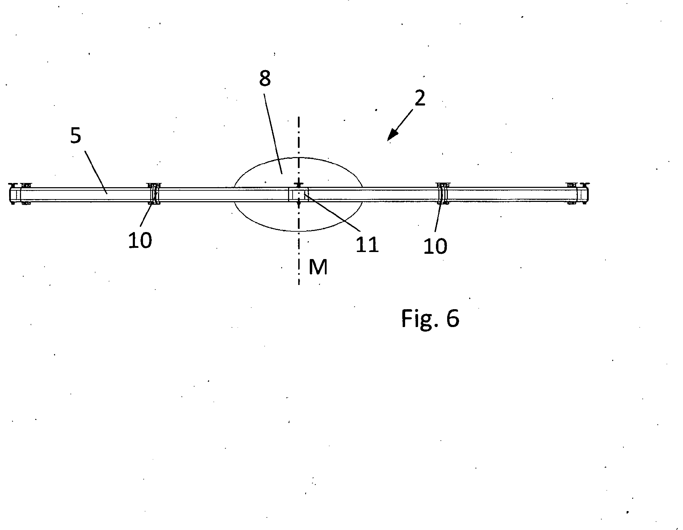

Diese Tragwerksstruktur 2 sowie die Zentraleinheit 8 des Flugmoduls 1 gemäß Figur 1 sind in Figur 4 schematisch in der Draufsicht und in Figur 6 in der Seitenansicht dargestellt. Die Tragwerksstruktur 2 wird durch sechs radial von der Zentraleinheit 8 nach außen verlaufenden Tragwerksbalken 5 sowie durch sechs weitere Tragwerksbalken gebildet, welche die der Zentraleinheit 8 gegenüberliegenden Enden der radial verlaufenden Tragwerksbalken 5 unter Ausbildung eines Sechsecks an den Knotenpunkten 4 miteinander verbinden.

Die Tragwerksbalken 5 sind an den Knotenpunkten 4 mittels T-Stück-förmige Verbindungsstücke 11 formschlüssig miteinander verbunden.

Die Verbindungsstücke 11 des Ausführungsbeispiels bestehen aus einem Faserverbundwerkstoff.

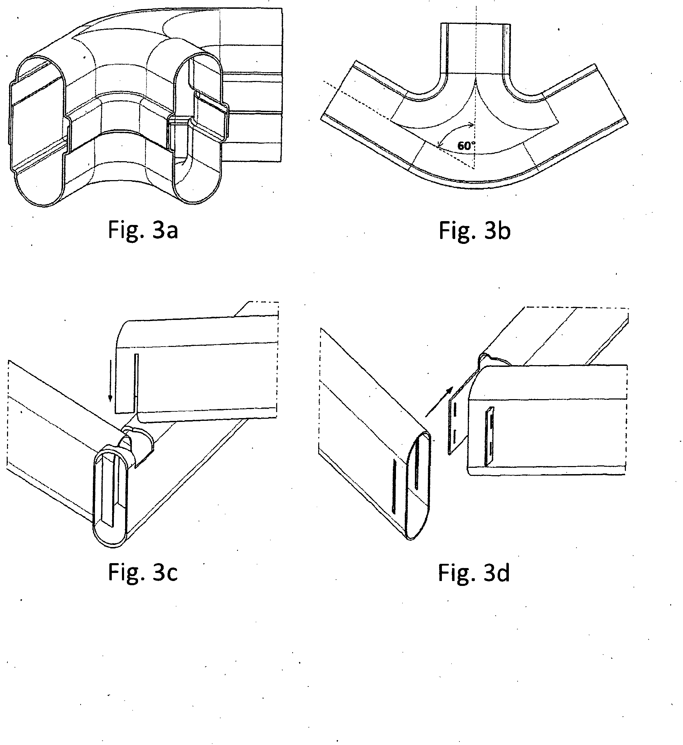

Zur Vereinfachung der Montage und Wartung sind die Verbindungsstücke 11 des Ausführungsbeispiels zweiteilig aus einer Ober- und einer Unterschale ausgeführt (S. Detaildarstellung nach Figur 3a).

Die Enden der Tragwerksbalken 5 sind beispielsweise mindestens 100 mm tief in die T-Stück-förmigen Verbindungsstücke eingesteckt oder eingelegt, wobei im geschlossenen Zustand der zweiteiligen Verbindungsstücke 11 die Enden der Tragwerksbalken 5 vollständig umschließend aufgenommen sind.

Durch den bündigen Sitz der Tragwerksbalken 5 in den Verbindungsstücken 11 wird die Ausrichtbarkeit der Tragwerksbalken 5 verbessert. Zudem werden die Lagerkräfte gleichmäßiger verteilt.

Zur Ausbildung der hexagonalen Form der Tragwerksstruktur 2 weisen die Verbindungsstücke 11 drei Ausleger auf, wobei zwei Ausleger jeweils einen Winkel von 60° zueinander einschließen (S. Detaildarstellung nach Figur 3b).

Die miteinander zu verbindenden Tragwerksbalken 5 können zusätzlich innerhalb des T-stückförmigen Verbindungsstückes untereinander formschlüssig verbunden werden. Dazu können die Enden der Tragwerksbalken 5 Schlitze und Stege aufweisen, mittels derer die Tragwerksbalken 5 in einem bestimmten Winkel zueinander zusammengesteckt werden können (Figur 3c, 3d).

Die zusammengesteckten Enden der Tragwerksbalken 5 können in die Ober- oder Unterschale des zweiteiligen T-stückförmigen Verbindungsstückes 11 eingelegt werden und nach Verschluss des T-stückförmigen Verbindungsstückes 11 vollständig vom T-stückförmigen Verbindungsstückes 11 umschlossen werden.

Des Weiteren sind in Figur 4 Schellen alsBefestigungsmittel 10 ersichtlich, die zur Befestigung von Antriebseinheiten 3 an den Tragwerksbalken 5 der Tragwerksstruktur 2 dienen. Die Befestigungsmittel 10 sind sowohl ungefähr mittig auf jedem Tragwerksbalken 5 sowie am äußeren Ende der radial von der Zentraleinheit 8 nach außen verlaufenden Tragwerksbalken 5, jedoch außerhalb der Knotenpunkte 4 angeordnet. Insgesamt sind im Ausführungsbeispiel 18 Befestigungsmittel 10 zur Befestigung von 18 Antriebseinheiten vorgesehen, wobei jedoch auch eine davon abweichende Anzahl an Befestigungsmitteln 10 bzw. Antriebseinheiten 3 vorgesehen sein kann.

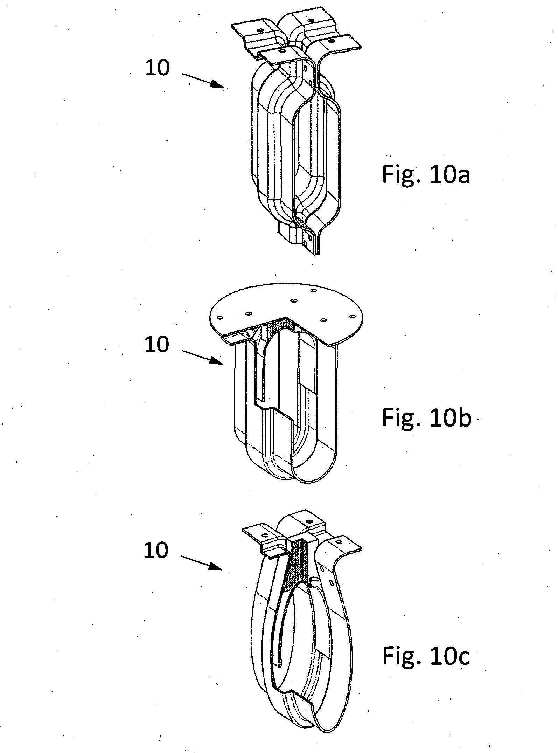

Die Befestigungsmittel 10 können beispielsweise wie in den Figuren 10a bis 10 c dargestellt ausgebildet sein.

Figur 10a zeigt eine zweiteilige Schelle 10 als Befestigungselement 10 aus zwei halbschalenförmigen Schellenteilen mit jeweils einseitig abgewinkelten Enden, die durch eine Verschraubung in horizontaler Richtung mit dem Tragwerksbalken 5 (nicht gezeigt) verspannt werden. Die abgewinkelten Enden stellen einen Bereich zur Verbindung der Schellenteile mit der Antriebseinheit 3 (nicht dargestellt) bereit, wobei die Schellenteile durch eine Schraub- oder Nietverbindung mit der Antriebseinheit 3 verbunden sein können.

In Figur 10b ist eine Schelle als Befestigungsmittel 10 dargestellt, die ein Omega-förmiges, unteres Schellenteil mit beidseitig abgewinkelten Enden, ein U-förmiges, oberes Schellenteil und ein flächiges Deckelelement aufweist.

Das Omega-förmige, untere Schellenteil umschließt den Tragwerksbalken zumindest teilweise seitlich und im unteren Bereich. Das U-förmige obere Schellenteil umschließt den Tragwerksbalken 5 zumindest teilweise seitlich und im oberen Bereich.

Das Deckelelement der Schelle ist durch eine Schraub- oder Nietverbindung mit den abgewinkelten Enden des Omega-förmigen Schellenteils verbunden, wodurch die Schelle, in vertikaler Richtung mit dem Tragwerksbalken 5 verspannt wird. Darüber hinaus dient das Deckelelement dem Anschluss der Antriebseinheit 3 (nicht dargestellt).

Zusätzlich ist ein Druckstück (Zwischenlageelement) vorgesehen sein, welches das U-förmige, obere Schellenteil gegen das Deckelelement abstützt, wodurch beim Schließen der Schelle das Omega-förmige untere Schellenteil und das U-förmige, obere Schellenteil sowohl gegeneinander als auch gegen den Tragwerksbalken 5 verspannt und damit die kraft- und formschlüssige Verbindung zwischen Schelle und Tragwerksbalken 5 herstellt. Das Druckstück kann auch Bestandteil des Deckelelements oder des U-förmigen Schellenteils sein).

Die Schelle gemäß Fig. 10b ist somit vierteilig ausgebildet.

In Figur 10c ist eine Schelle als Befestigungsmittel 10 dargestellt, die ein Omega-förmiges, unteres Schellenteil mit beidseitig abgewinkelten Enden, ein U-förmiges oberes Schellenteil und ein Druckstück (Zwischenlageelement) aufweist.

Das Omega-förmige, untere Schellenteil umschließt den Tragwerksbalken 5 zumindest teilweise seitlich und im unteren Bereich, wobei die abgewinkelten Enden des Omega-förmigen, unteren Schellenteils einen Bereich zur Verbindung mit der Antriebseinheit 3 bereitstellen.

Das U-förmige, obere Schellenteil umschließt den Tragwerksbalken 5 zumindest teilweise seitlich und im oberen Bereich.

Die abgewinkelten Enden des Omega-förmigen Schellenteils Schelle sind durch eine Schraub- oder Nietverbindung mit der der Antriebseinheit 3 (nicht dargestellt) verbindbar, wodurch die Schelle in vertikaler Richtung mit dem Tragwerksbalken 5 verspannt wird.

Das zusätzlich vorgesehene Druckstück (Zwischenlageelement) stützt die abgewinkelten Enden des Omega-förmigen Schellenteils oberhalb des Tragwerkbalkens 5 und bewirkt beim Schließen der Schelle und Montage der Antriebseinheit 3 eine Verspannung des Omega-förmigen, unteren Schellenteils und des U-förmigen, obere Schellenteils gegen den Tragwerksbalken 5 und stellt damit die kraft- und formschlüssige Verbindung zwischen Schelle und Tragwerksbalken 5 her. Das Druckstück kann Bestandteildes U-förmigen Schellenteils sein.

Die Schelle gemäß Fig. 10c ist somit dreiteilig ausgebildet.

Im oberen Bereich verfügen die Befestigungsmittel 10 nach den Figuren 10a bis 10c jeweils über abgewinkelte Enden zur unmittelbaren Aufnahme der Antriebseinheiten 3 (Fig. 10a, 10c), oder zur mittelbaren Aufnahme der Antriebseinheiten 3 (Fig. 10b) über das Deckelelement.

Die Antriebseinheiten 3 können mit dem abgewinkelten Enden bzw. mit dem Deckelelement verschraubt oder vernietet werden.

Die Befestigungsmittel 10 gemäß den Figuren 10a bis 10c bilden im Montagezustand jeweils eine Omega-Form, d. h. ihre äußere Form entspricht in etwa dem griechischen Großbuchstaben Omega. Die Befestigungsmittel 10 sind zudem so ausgebildet, dass sie der Außenkontur der Tragwerksbalken 5 weitestgehend folgen und den Tragwerksbalken seitlich und unten zumindest teilweise umfassen, so dass im Verbindungszustand ein Kraft- und Formschluss mit dem Tragwerksbalken 5 gewährleistet ist.

Die Tragwerksbalken 5 bestehen aus einem pultrudierten Hohlprofil aus faserverstärktem Kunststoff, z. B. kohlefaserverstärktem Kunststoff.

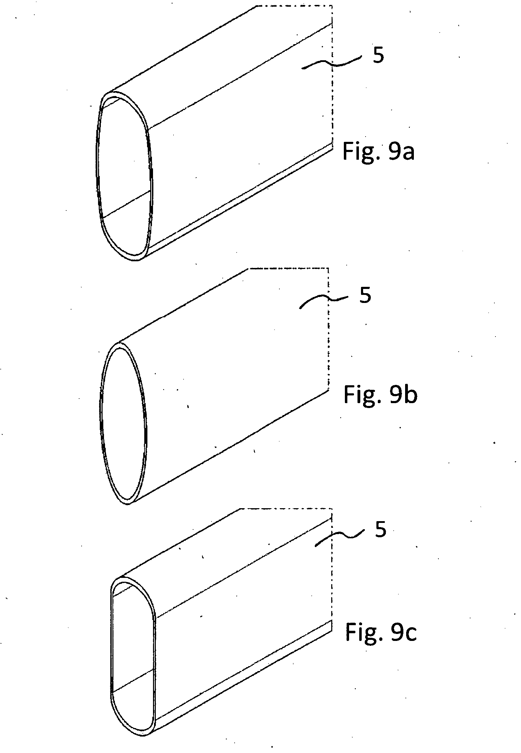

Günstige Ausführungen der Hohlprofile des Tragwerkbalkens weisen nach Figur 9a, 9b und 9c jeweils einen längserstreckten Profilquerschnitt auf. Die Figuren 9a bis 9c zeigen drei Hohlprofile in Schnittdarstellung, wovon das Hohlprofil gemäß Figur 9a einen bevorzugten ovalen Querschnitt, das Hohlprofil gemäß Figur 9b einen elliptischen und das Hohlprofil gemäß Figur 9c einen langlochförmigen Querschnitt aufweist. Die Längsseiten der Hohlprofile weisen jeweils in eine senkrechte Wirkrichtung der Antriebseinheiten 3 (nicht dargestellt).

Das Hohlprofil der Tragwerksbalken 5 gemäß Figur 9a, 9b und 9c weist jeweils eine variable Wandstärke in Umfangsrichtung des Tragwerksbalkens 5 auf.

In Bereichen des Umfangs mit hoher Beanspruchung infolge einwirkender Kräfte ist die Wandstärke größer als in Bereichen geringerer Beanspruchung. Beispielweise kann die Wandstärke, wie in Figur 9a, 9b, 9c ersichtlich, im Bereich der Schmalseiten des Umfangs(oben und unten in der Darstellung gemäß Figur 9a, 9b, 9c) größer als im Bereich der Längsseiten des Umfangs sein. Weiterhin kann die Wandstärke nicht nur in Umfangsrichtung entlang des Querschnitts unterschiedlich groß sein, sondern auch entlang der Längserstreckung des Balkens 5 variieren. Beispielsweise kann die Wandstärke der radial von der Zentraleinheit 8 nach außen verlaufenden Tragwerksbalken von außen nach innen in Richtung Zentraleinheit 8 zunehmen. Die auftretenden Belastungen können computersimuliert werden, um die erforderliche Mindestwandstärke zu berechnen.

Im Hohlprofil verlaufen Leitungen zur signaltechnischen Verbindung sowie Energieversorgung.

Erneut bezugnehmend auf Figur 1, ist ersichtlich, dass das Flugmodul 1 Antriebseinheiten 3 aufweist, die jeweils über einen Propeller 7 mit einem Rotor aus zwei Rotorblätter und einen bürstenlosen Gleichstrommotor als Elektromotor 6 verfügen, wobei der Propeller 7 mittels des Elektromotors 6 angetrieben wird. Mittels einer Nabe des jeweiligen Propellers 7 ist dieser drehbar am Elektromotor 6 gelagert.

Optional kann eine Abdeckung, z. B. in Form eines Spinners, zur Abdichtung der Antriebseinheit 3 gegenüber Wasser und Schmutz sowie zur Verbesserung der Aerodynamik vorhanden sein. Die Propeller 7, insbesondere dessen Rotoren, weisen einen Faserverbundwerkstoff, z. B. kohlefaserverstärkten Kunststoff, auf.

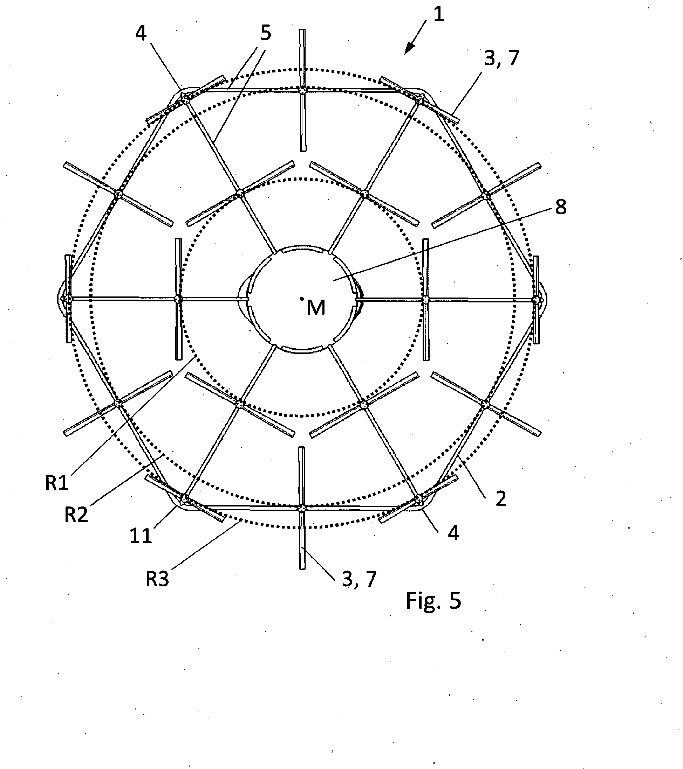

Figur 5 zeigt die Draufsicht des Flugmoduls 1 gemäß Figur 1 schematisch.

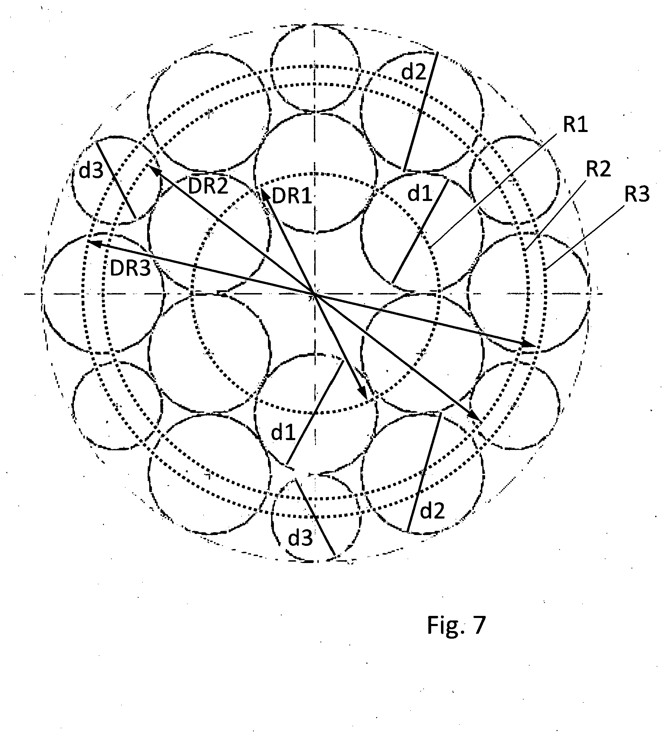

Die Antriebseinheiten 3, im Ausführungsbeispiel 18 Antriebseinheiten 3, sind in einer Ebene E der Tragwerksstruktur 2 außerhalb der Knotenpunkte 4 in einem ersten, einem zweiten und einem dritten Ring (R1, R2, R3) mit jeweils sechs Antriebseinheiten 3 konzentrisch um die vertikale Mittelachse (M) des Flugmoduls 1 angeordnet. Der erste, zweite und dritte Ring R1, R2, R3 weisen einen unterschiedlichen Ringdurchmesser DR1, DR2, DR3 auf (ersichtlich auch in Figur 7).

Die Antriebseinheiten 3 sind mittels der als Schellen ausgebildeten Befestigungsmittel 10 unmittelbar an den Tragwerksbalken 5 der Tragwerksstruktur 2 befestigt.

Die Rotoren der Propeller 7 der Antriebseinheiten 3 weisen unterschiedliche Durchmesser d1, d2, d3 auf. Im Ausführungsbeispiel weisen die Rotoren der sechs Propeller 7 der Antriebseinheiten 3 des ersten (inneren) Rings R1 einen ersten einheitlichen Durchmesser d1 von 1800 mm auf. Die Rotoren der sechs Propeller 7 der Antriebseinheiten 3 des zweiten Rings R2 weisen einen zweiten Durchmesser d2 auf, der im Ausführungsbeispiel dem Durchmesser d1 der Rotoren der Propeller 7 des inneren ersten Rings von 1800 mm entspricht. Die Rotoren der sechs Propeller 7 der Antriebseinheiten 3 des dritten Rings R3 weisen einen dritten Durchmesser d3 von 1300 mm auf (Figur 7). Mit anderen Worten weist das Flugmodul 1 zwölf Propeller 7 mit Rotoren mit einem Durchmesser d1, d2 von 1800 mm und sechs Propeller 7 mit Rotoren mit einem Durchmesser d3 von 1300 mm auf.

Aus der Anordnung der Antriebseinheiten um die vertikale Mittelachse (M) und der Größe der Rotoren der Propeller ergibt sich nach diesem Ausführungsbeispiel ein Gesamtdurchmesser des Flugmoduls von maximal 8,14 m.

In Figur 7 ist in einer schematischen Draufsicht auf das Flugmodul 1 die durch die Rotoren der Propeller 7 der Antriebseinheiten 3 des Flugmoduls 1 erreichbare Luftraumabdeckung dargestellt. Es zeigt sich, dass durch die beschriebene Auswahl der Rotoren der Propeller 7 eine hohe Konzentration der abdeckbaren Fläche oberhalb des Tragwerksystems 2 und damit eine sehr gute Luftraumabdeckung erreicht wird, obwohl lediglich zwei Rotorsorten unterschiedlichen Durchmessers gefertigt werden müssen.

Durch die sehr gute Luftraumabdeckung wird die Leistungsfähigkeit des Flugmoduls 1 verbessert und gleichzeitig der Platzbedarf des Flugmoduls 1 beim Starten und Landen und dem Aufenthalt am Boden minimiert, was insbesondere beim Betrieb des Flugmoduls 1 in einem urbanen Umfeld vorteilhaft ist.

Die Zentraleinheit 8 des Flugmoduls 1 ist in Form einer Halbkugel aus kohlefaserverstärktem oder glasfaserverstärktem Kunststoff ausgebildet. In der Zentraleinheit 8 befindet sich die Kommunikations- und Steuerungstechnik des Flugmoduls 1. Zudem befinden sich in der Zentraleinheit 8 wiederaufladbare Akkumulatoren zur Energieversorgung der Antriebseinheiten 3 sowie weiterer elektrischer Energieverbraucher.

Optional kann in der Zentraleinheit 8 zudem ein Rettungssystem mit einen Fallschirm zum Herausschießen untergebracht sen.

Die Zentraleinheit 8 des Flugmoduls 1 weist eine Kupplungseinrichtung, z. B. ein Kupplungsgegenstück einer Gelenkkupplung zwischen einem kuppelbaren Transportmodul 9 und dem Flugmodul 1 (nicht dargestellt), zur lösbaren und richtungsflexiblen Verbindung des Flugmoduls 1 mit einem Transportmodul 9 auf.

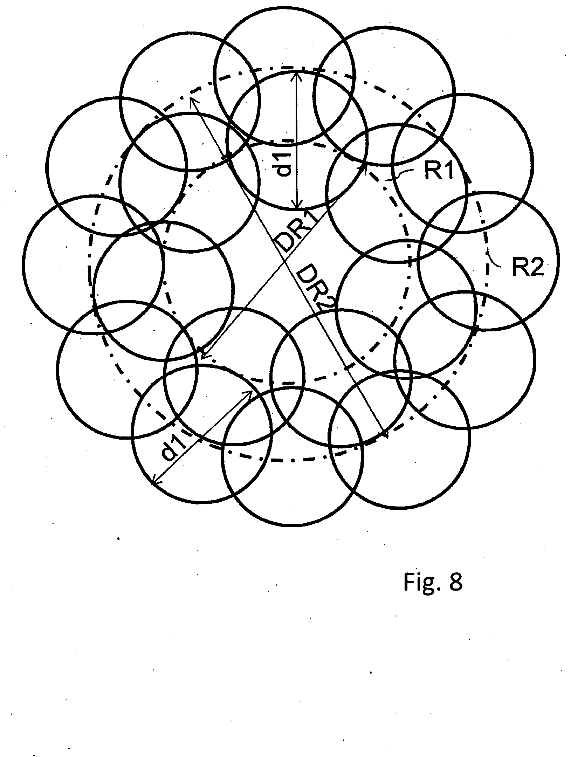

Figur 8 zeigt in einer schematischen Draufsicht auf das Flugmodul 1 die Luftraumabdeckung durch die Propeller 7 der Antriebseinheiten 3 eines Flugmoduls 1 in einer weiteren Variante. In dieser Ausführungsvariante sind die Antriebseinheiten 3 in zwei Ringen R1, R2 um die Mittelachse (M) des Flugmoduls 1 angeordnet, wobei die zwei Ringe R1, R2 einen unterschiedlichen Ringdurchmesser DR1, DR2 aufweisen. Der innere Ring R1 mit kleinerem Ringdurchmesser DR1 als der äußere Ring R2 weist sechs Antriebseinheiten 3 auf. Der äußere Ring R3 weist zwölf Antriebseinheiten 3 auf.

Die Rotoren der Propeller 7 der Antriebseinheiten 3 eines Rings R1, R2 als auch der Ringe R1, R2 untereinander weisen einen einheitlichen Durchmesser d1 auf. Mithin ist der Durchmesser d1 aller Rotoren gleich groß, was die Fertigung und Montage des Flugmoduls 1 vereinfacht.

Weiterhin sind die Ringdurchmesser DR1, DR2 und der Durchmesser d1 der Rotoren so gewählt, dass der Luftraum überlappend abgedeckt wird. Mit anderen Worten überlappen sich die von den Rotoren genutzten Lufträume in der Draufsicht auf das Flugmodul 1 zumindest teilweise.

Figur 2 zeigt das Flugmodul 1 gemäß Figur 1 mit auf diese Weise angekuppeltem Transportmodul 9. Die Kupplungseinrichtung ist mittig an der Unterseite der Zentraleinheit 8 angeordnet, so dass sich auch das Transportmodul 9 mittig unterhalb des Flugmoduls 1 befindet. Das Transportmodul 9 kann eine Beförderungskapsel und einen sich daran anschließenden längserstreckten Schaft aufweisen, wobei der Schaft, wie in Figur 2 gezeigt, in Verlängerung der Mittelachse (M) des Flugmoduls 1 angeordnet sein kann.

Mittels der Gelenkkupplung ist die Neigung des Flugmoduls 1 bezüglich des angekuppelten Transportmoduls 9 variierbar. Dadurch kann eine vertikale Ausrichtung des Transportmoduls 9 auch bei einer abweichenden Ausrichtung des Flugmoduls 1 während des Flugbetriebes weitestgehend beibehalten werden und der Schwerpunkt des Fluggeräts auf einen beschränkten zentralen Bereich des Flugmoduls zentriert werden, was den Komfort und die Steuer- und Regelfähigkeit des Fluggerätes verbessert.

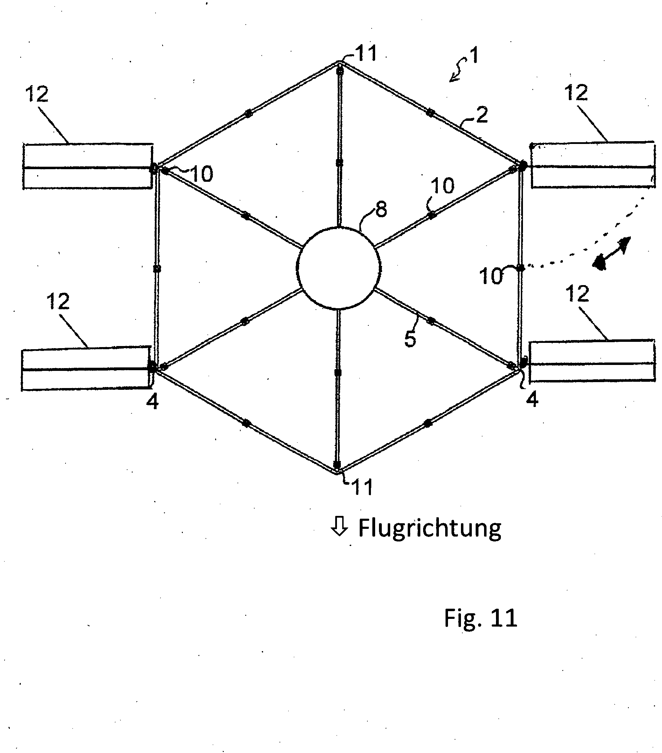

Figur 11 zeigt ein Flugmodul 1 der Figur 4 mit vier Luftleiteinrichtungen 12, welche als Auftriebsmittel fungieren. Die Luftleiteinrichtungen 12 weisen flächige Flügel auf. Sie können an den Tragwerksbalken 5 der Tragwerksstruktur 2 des Flugmoduls 1 oder an den Verbindungsstücken 11 zur Verbindung der Tragwerksbalken 5 der Tragwerksstruktur 2 befestigt werden.

Sie können drehbar gelagert ausgebildet sein, so dass die Luftleiteinrichtungen 12 an die Tragwerksstruktur 2 angeklappt und von dieser abgeklappt werden können(Punktlinie mit Doppelpfeil).

Die Luftleiteinrichtungen 12 weisen jeweils einen flächigen Flügel 12 auf, der zum Beispiel um seine Längsachse drehbar gelagert ist.

Bei entsprechend schnellem Vorwärtsflug in gezeigter Flugrichtung werden die Flügel ausgeklappt und unterstützen die Propeller 7 der Antriebseinheiten 3 (hier nicht sichtbar) dabei, einen zusätzlichen Auftrieb zu erzeugen.

Zusätzlich können die Flügel um ihre Längsachse gedreht werden, um den Anstellwinkel gegenüber der Luftströmung zu verändern und damit den Auftrieb anzupassen.

Vorzugsweise sind die Flügel im oberen oder seitlichen Bereich der Tragwerksstruktur 2 des Flugmoduls 1 an den Tragwerksbalken 5 angeordnet, da hier die Beeinflussung durch den Abstrom der Propeller 7 am geringsten ist.

Die Lufteinrichtungen 12 können in ihrer Ausrichtung zum Transportmodul 9 bzw. zur Tragwerkstruktur 2 des Flugmoduls 1 steuerbar einstellbar ausgebildet sein, so dass die Funktion während des Flugbetriebes optimal an die Strömungsverhältnisse etc. angepasst werden kann.

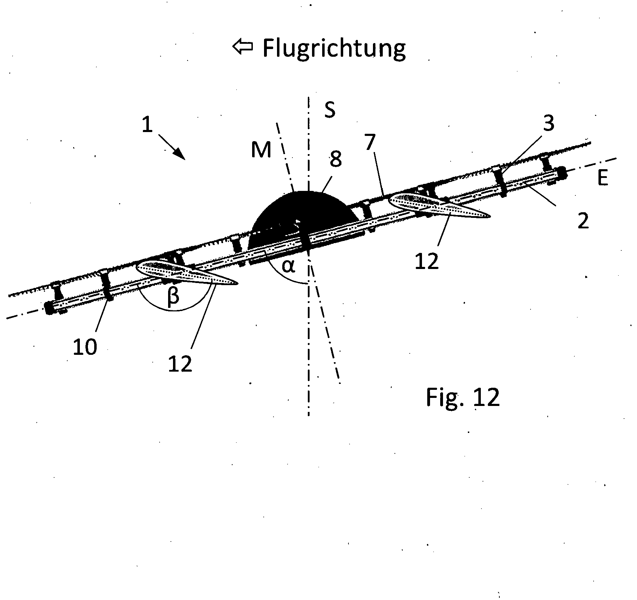

Figur 12 zeigt in einer Seitenansicht ein in Flugrichtung nach unten geneigtes Flugmodul 1 mit einem Neigungswinkel α von ungefähr 75°. Der Neigungswinkel α wird von der Ebene E der Tragwerksstruktur 2 und der senkrecht verlaufenden Schwerkraftlinie S eingeschlossen. Eine solcher Neigungswinkel α kann beispielsweise während des Beschleunigens des Flugmoduls 1 eingestellt werden.

Das Flugmodul 1 weist vier Luftleiteinrichtungen 12 auf, die wie in der Draufsicht gemäß Figur 11 dargestellt, an der Tragwerkstruktur 2 Flugmoduls 1 angeordnet sind und von denen in der Fig. 12 lediglich zwei ersichtlich sind. Die Luftleiteinrichtungen 12 sind gegenüber der Ebene E der Tragwerksstruktur 2 mit einem Anstellwinkel β von ungefähr 150° angestellt. Der Anstellwinkel β wird von der Ebene E der Tragwerksstruktur 2 und der mittleren Querschnittsebene der Luftleiteinrichtung 12 eingeschlossen.

In einer Bremssituation (nicht dargestellt) können die Neigung des Flugmoduls 1 gegenüber der Schwerkraftlinie S sowie die Anstellung der Luftleiteinrichtungen 12 entgegengesetzt erfolgen, so dass sich beispielsweise ein Neigungswinkel α von ungefähr 105° und Anstellwinkel β von ungefähr 235° ergeben können.

Hinsichtlich der weiteren Elemente des Flugmoduls 1 der Figur 12 wird auf die vorherigen Erläuterungen verwiesen.

Der hier verwendete Ausdruck "und/oder", wenn er in einer Reihe von zwei oder mehreren Elementen benutzt wird, bedeutet, dass jedes der aufgeführten Elemente alleine verwendet werden kann, oder es kann jede Kombination von zwei oder mehr der aufgeführten Elemente verwendet werden.

Wird beispielsweise eine Beziehung beschrieben, die die Komponenten A, B und/oder C, enthält, kann die Beziehung die Komponenten A alleine; B alleine; C alleine; A und B in Kombination; A und C in Kombination; B und C in Kombination; oder A, B, und C in Kombination enthalten.

### Bezugszeichenliste

- 1: Flugmodul
- 2: Tragwerksstruktur
- 3: Antriebseinheit
- 4: Knotenpunkt
- 5: Tragwerksbalken
- 6: Elektromotor
- 7: Propeller
- 8: Zentraleinheit
- 9: Transportmodul
- 10: Befestigungsmittel
- 11: Verbindungsstück
- 12: Luftleiteinrichtung

- R1, R2, R3: erster, zweiter, dritter Ring
- d1, d2, d3: Durchmesser des Rotors
- DR1, DR2, DR3: Durchmesser des Rings

- M: Mittelachse des Flugmoduls
- E: Ebene der Tragwerksstruktur
- S: Schwerkraftlinie

- α: Neigungswinkel
- β: Anstellwinkel

## Patentansprüche

1. Flugmodul (1) für ein senkrecht startendes und landendes Fluggerät mit mehreren, an einer Tragwerksstruktur (2) angeordneten Antriebseinheiten (3), wobei die Tragwerksstruktur (2) an Knotenpunkten (4) miteinander verbundene Tragwerksbalken (5) aufweist und jede Antriebseinheit (3) einen Elektromotor (6) und wenigstens einen mit dem Elektromotor (6) in Wirkverbindung stehenden Propeller (7) aufweist, und eine Anzahl der Antriebseinheiten (3) außerhalb der Knotenpunkte (4) angeordnet ist, wobei das Flugmodul (1) eine oder mehrere seitlich an der Tragwerkstruktur befestigte, flügelartige Luftleiteinrichtungen (12) aufweist, die derart drehbeweglich ausgebildet sind, dass sie an die Tragwerkstruktur angeklappt und von dieser abgeklappt werden können.

2. Flugmodul (1) gemäß Anspruch 1, dass die flügelartigen Luftleiteinrichtungen (12) zusätzlich um ihre Längsachse drehbar gelagert sind.

3. Flugmodul (1) gemäß einem der vorstehenden Ansprüche, **dadurch gekennzeichnet, dass** das Flugmodul (1), vorzugsweise eine Zentraleinheit (8) des Flugmoduls (1), eine Kupplungseinrichtung zur Verbindung des Flugmoduls (1) mit einem Transportmodul (9) aufweist.

4. Flugmodul (1) gemäß einem der vorstehenden Ansprüche, **dadurch gekennzeichnet, dass** ein Neigungswinkel α des Flugmoduls (1) variierbar ist.

5. Flugmodul (1) gemäß einem der vorstehenden Ansprüche, **dadurch gekennzeichnet, dass** ein Anstellwinkel β der Luftleiteinrichtungen (12) variierbar ist.

6. Flugmodul (1) gemäß einem der vorstehenden Ansprüche, **dadurch gekennzeichnet, dass** eine Anzahl der Antriebseinheiten (3) in einem oder mehreren Ringen (R1, R2, R3) um die Mittelachse (M) des Flugmoduls (1) angeordnet sind.

7. Flugmodul (1) gemäß einem der vorstehenden Ansprüche, **dadurch gekennzeichnet, dass** die Rotoren der Propeller (7) einer Anzahl der Antriebseinheiten (3) unterschiedliche Durchmesser (d1, d2, d3) aufweisen.

8. Flugmodul (1) gemäß einem der Ansprüche 6 oder 7, **dadurch gekennzeichnet, dass** die Rotoren der Propeller (7) der Antriebseinheiten (3) eines Rings (R1, R2, R3) einen einheitlichen oder einen unterschiedlichen Durchmesser (d1, d2, d3) aufweisen.

9. Flugmodul (1) gemäß einem der vorstehenden Ansprüche, **dadurch gekennzeichnet, dass** einen Anzahl von Tragwerksbalken (5) ein Hohlprofil aufweist.

10. Flugmodul (1) gemäß Anspruch 9, **dadurch gekennzeichnet, dass** das Hohlprofil des Tragwerksbalkens (5) einen in Wirkrichtung der Antriebseinheiten (3) längserstreckten Profilquerschnitt, vorzugsweise einen ovalen Profilquerschnitt, aufweist.

11. Flugmodul (1) gemäß Anspruch 9 oder 10, **dadurch gekennzeichnet, dass** das Hohlprofil des Tragwerksbalkens (5) eine in Umfangsrichtung des Tragwerksbalkens (5) variable Wandstärke und/oder eine entlang der Längserstreckung des Tragwerksbalkens (5) variable Wandstärke aufweist.

12. Flugmodul (1) gemäß einem der vorstehenden Ansprüche, **dadurch gekennzeichnet, dass** die Tragwerksstruktur (2) und/oder die Zentraleinheit (8) und/oder eine Anzahl der Antriebseinheiten (3) Bauelemente aus Faserverbundwerkstoff aufweisen oder aus Faserverbundwerkstoff bestehen.

13. Flugmodul (1) gemäß Anspruch 12, **dadurch gekennzeichnet, dass** der Faserverbundwerkstoff textile Verstärkungselemente und/oder unidirektional angeordnete Verstärkungsfasern aufweist.

14. Flugmodul (1) gemäß einem der vorstehenden Ansprüche, **dadurch gekennzeichnet, dass** eine Anzahl der Antriebseinheiten (3) mittels kraft- und/oder formschlüssiger Befestigungsmittel (10) mit der Tragwerksstruktur (2), vorzugsweise mit den Tragwerksbalken (5), verbunden ist.

15. Flugmodul (1) gemäß Anspruch 14, **dadurch gekennzeichnet, dass** das Befestigungsmittel (10) als eine Schelle ausgebildet ist, die einen Tragwerksbalken (5) zumindest teilweise umschließt.
